# EUROPÄISCHE PATENTSCHRIFT

(11) **EP 2 138 916 B1**
(45) Veröffentlichungstag und Bekanntmachung des Hinweises auf die Patenterteilung: **07.05.2014**
(21) Anmeldenummer: 08011410.1
(22) Anmeldetag: 24.06.2008
(51) Int. Cl.: G05B 19/401, G05B 19/406, G05B 23/02, G05B 19/402

(54) **Positionsmesssystem**
Position measuring system
Système de mesure de position

(43) Veröffentlichungstag der Anmeldung: 30.12.2009
(73) Patentinhaber: SICK STEGMANN GmbH, 78166 Donaueschingen (DE)
(72) Erfinder: Siraky, Josef, 78166 Donaueschingen (DE); Mutschler, Reinhold, 78056 Villingen-Schwenningen (DE); Eustache, Mark, Troy, Ohio 45373 (US)
(74) Vertreter: Patentanwälte Westphal, Mussgnug & Partner

(56) Entgegenhaltungen:
- EP-A- 1 168 120
- EP-A- 1 564 611
- DE-A1- 4 342 377
- GB-A- 2 283 836

## Beschreibung

Die Erfindung betrifft ein Positionsmesssystem gemäß dem Oberbegriff des Anspruchs 1.

Positionsmesssysteme werden eingesetzt, um die rotatorische oder lineare Position zweier gegeneinander bewegbarer Objekte und von diesen Positionen abhängige Größen, wie z. B. Geschwindigkeit, Beschleunigung und dergleichen zu messen. Das Positionsmesssystem weist eine Positionsmesseinrichtung auf, die aus einer Maßverkörperung besteht, die optisch, kapazitiv, induktiv oder in sonstiger Weise abgetastet wird, wobei von der Abtastung erzeugte Positionssignale über eine Schnittstelle zu einer elektronischen Steuereinheit übertragen werden. Solche Positionsmesseinrichtungen sind in den unterschiedlichsten Ausführungen bekannter Stand der Technik, wobei bei dem erfindungsgemäßen Positionsmesssystem alle diese bekannten Positionsmesseinrichtungen zum Einsatz kommen können. Eine häufige Verwendung der Positionsmesseinrichtung ist die Vereinigung mit einem Motor als Servoantrieb.

Weiter ist es z. B. aus der DE 43 42 377 A1 bekannt, das Positionsmesssystem mit einem Mikrokontroller oder Mikroprozessor und mit einem Speicher auszustatten. In dem Speicher können charakteristische Werte des Positionsmesssystems abgespeichert werden und sind aus dem Speicher auslesbar und über die Schnittstelle an die Steuereinheit übertragbar. Bei diesem bekannten Positionsmesssystem dient der Speicher als sogenanntes "elektronisches Typenschild". Die in dem Speicher abgelegten charakteristischen Werte sind Parameter, die das Messsystem charakterisieren und zum Adaptieren des Messsystems an die Steuereinheit dienen. Diese charakteristischen Parameter werden teilweise vom Hersteller des Messsystems in dem Speicher abgelegt und können teilweise auch von dem Anwender abgespeichert werden. Solche Parameter sind beispielsweise Angaben über den Typ der Positionsmesseinrichtung, über die Datenübertragungsformate, über die Signalperioden, über die Position von Referenzmarken, über Nullpunktverschiebungen und über die Typenangabe und die Serzennummer des Messsystems. Diese charakteristischen Parameter werden in der Regel vor der Inbetriebnahme des Positionsmesssystems einmal abgespeichert und können jeweils abgerufen werden, wenn das Positionsmesssystem an eine nachgeschaltete elektronische Steuereinheit angeschlossen wird und angepasst werden muss.

Bei einem aus der EP-A-1 168 120 bekannten Messsystem der den Oberbegriff des Patentanspruchs 1 bildenden Gattung dient der Mikroprozessor der Positionsmesseinrichtung nicht nur dazu, die in dem nicht flüchtigen Speicher abgespeicherten charakteristischen Werte des Positionsmesssystems auf Anforderung der Steuereinheit an diese zu übertragen. Es können auch sich während des Betriebs des Positionsmesssystems ändernde Zustandsgrößen erfasst und an die Steuereinheit übertragen werden. Da diese Zustandsgrößen für die Steuerung weniger zeitkritisch sind als die Positionsmessdaten, werden diese zeitunkritischen Zustandsgrößen in der Positionsmesseinrichtung zwischengespeichert und in freien Zeitintervallen der Übertragung der zeitkritischen Positionsdaten übertragen. Diese zeitunkritischen Zustandsgrößen können Betriebswerte sein, die z. B. den Zustand des Speichers betreffen, oder Messwerte, z. B. Temperatur- oder Beschleunigungsmessewerte. Es werden jeweils nur die bei einem Anforderungsbefehl aktuell vorliegenden Zustandsgrößen übertragen.

Der Erfindung liegt die Aufgabe zu Grunde, ein gattungsgemäßes Positionsmesssystem so weiterzuentwickeln, dass zusätzliche Informationen zur Verfügung stehen, die die Brauchbarkeit des Positionsmesssystems erweitern, indem während des Betriebs des Positionsmesssystems für dessen Funktion wichtige Zustandsgrößen überwacht werden.

Diese Aufgabe wird erfindungsgemäß gelöst durch ein Positionsmesssystem mit den Merkmalen des Patentanspruchs 1.

Vorteilhafte Ausführungen der Erfindung sind in den Unteransprüchen angegeben.

Der wesentliche Gedanke der Erfindung besteht darin, den internen nicht flüchtigen Speicher des Positionsmesssystems zusätzlich dazu zu verwenden, während des Betriebs des Messsystems Zustandsgrößen die für die Funktion des Messsystems oder allgemeiner eines das Messsystem verwendenden Servoantriebs wichtig sind und sich während des Betriebs ändern können, zu erfassen und in dem Speicher abzuspeichern. Dadurch wird es möglich, für den Betrieb des Messsystems oder Servoantriebs wesentliche Zustandsgrößen fortlaufend aufzuzeichnen. Die Aufzeichnung der Zustandsgrößen kann einerseits dazu verwendet werden, den Betrieb des Messsystems oder Servoantriebs zu überwachen und eventuelle Fehler und Störungen zu ermitteln und zu identifizieren. Ebenso kann die Aufzeichnung der Zustandsgrößen dazu verwendet werden, die Betriebsdauer des Messsystems und die Beanspruchungen, insbesondere mechanische Beanspruchungen des Messsystems und/oder Servoantriebs während des Betriebs zu registrieren, um daraus die Lebensdauer des Messsystems bzw. Servoantriebs und/oder Wartungsintervalle zu berechnen.

Dem Positionsmesssystem ist eine Uhr zugeordnet, die eine Erfassung der Zustandsgrößen in Realzeit ermöglicht. Diese Uhr kann in das Messsystem integriert sein, z. B. in den Mikrokontroller integriert sein. Ebenso ist es möglich, eine externe Uhr zu verwenden, die vorzugsweise in der elektronischen Steuereinheit vorhanden ist, so dass bei Anschließen des Positionsmesssystems an die elektronische Steuereinheit oder beim Einschalten des Positionsmesssystems die reale Uhrzeit aus der Steuereinheit über die Schnittstelle empfangen wird.

Die Zustandsgrößen, die während des Betriebs des Messsystems erfasst und in dem Speicher abgespeichert werden, umfassen insbesondere Betriebswerte des Systems. Als Betriebswerte werden dabei solche Werte bezeichnet, die mit der Funktion der Positionsmesseinrichtung während des Betriebs verknüpft sind. Solche Betriebswerte sind beispielsweise die Spannungs-und/oder Stromamplitude der Positionssignale, die Geschwindigkeit und/oder Beschleunigung der Positionsmesseinrichtung und dergleichen. Bei solchen Betriebswerten, die sich bei ordnungsgemäßer Funktion des Messsystems nicht oder nur wenig ändern, ist es vorteilhaft, jeweils die Maxima dieser Betriebswerte zu erfassen und abzuspeichern. Diese Maxima müssen bei einem ordnungsgemäßen Verlauf innerhalb vorgegebener Toleranzen liegen. Dabei ist es zweckmäßig, diese Maxima in vorgebbaren Zeitintervallen zu ermitteln und abzuspeichern.

Weitere Betriebswerte sind solche Werte, die einen Einfluss auf die Lebensdauer bzw. auf Wartungsintervalle haben. Solche Betriebswerte, die sich auch auf den gesamten Servoantrieb beziehen können, sind z.B. die Betriebsdauer, d. h. die gesamte. Einschaltdauer des Messsystems, die Anzahl der Umkehrungen der Bewegungsrichtung der Positionsmesseinrichtung und bei rotatorischen Messeinrichtungen z. B. die Anzahl der Umdrehungen dieser Messeinrichtung. Solche Betriebswerte werden kontinuierlich erfasst und durch den Mikrokontroller aufsummiert und abgespeichert.

Weiter kann das Positionsmesssystem zusätzliche Sensoren aufweisen, die für den Betrieb und die Funktion des Messsystems und/oder Servoantriebs wesentliche Umgebungseinflüsse erfassen. Die Zustandsgrößen sind in diesem Falle die Messwerte dieser Sensoren. Solche Sensoren, die in an sich bekannter Weise aufgebaut sein können, umfassen beispielsweise Sensoren für die Temperatur, für Erschütterung, wobei sowohl die Stärke als auch die Frequenz der Erschütterungen gemessen werden kann, und die auf den Servoantrieb wirkende Last. Auch bei diesen zusätzlichen Messwerten ist es in der Regel zweckmäßig, die Maxima dieser Messwerte zu ermitteln und abzuspeichern, wobei auch hier jeweils die Maxima innerhalb vorgebbarer Zeitintervalle ermittelt und abgespeichert werden können.

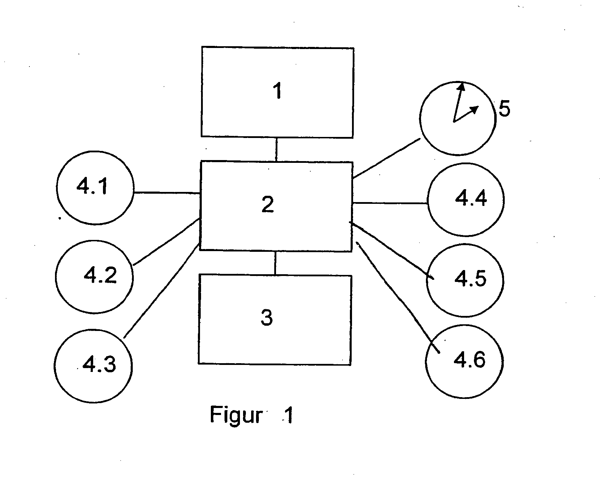

Im Folgenden wird die Erfindung anhand eines in der Zeichnung dargestellten Ausführungsbeispiels näher erläutert, wobei die einzige Figur 1 in einem schematischen Blockschaltbild den Aufbau des Positionsmesssystems zeigt.

Das Positionsmesssystem weist eine Positionsmesseinrichtung 1 auf, die in an sich bekannter Weise als lineare oder rotatorische Messeinrichtung ausgebildet sein kann, die eine optisch, kapazitiv, induktiv oder in sonstiger Weise abtastbare und inkremental oder absolut auswertbare Maßverkörperung aufweist. Die Messeinrichtung 1 ist mit einem Mikrokontroller oder Mikrocomputer 2 verbunden. Weiter weist das Messsystem einen nicht flüchtigen Speicher 3 auf, der z. B. als EEPROM ausgebildet ist. Der Speicher 3 ist in das Positionsmesssystem integriert. Hierzu kann der Speicher 3 beispielsweise in den Mikrokontroller 2 integriert sein oder als separates Speichermodul ausgebildet sein.

Der Mikrokontroller 2 ist mit einer Uhr 5 verbunden, die die Realzeit angibt. Die Uhr 5 kann in das Positionsmesssystem mit dem Mikrokontroller 2 integriert sein oder kann eine externe Uhr 5 einer dem Positionsmesssystem nachgeschalteten elektronischen Steuereinheit z.B. eines Servoantriebs sein. Im letzteren Fall wird die von der Uhr 5 angegebene Realzeit dem Mikrokontroller 2 über eine nicht dargestellte Schnittstelle zugeführt, wenn das Positionsmesssystem über diese Schnittstelle an die elektronische Steuereinheit angeschlossen und eingeschaltet wird.

Weiter sind an den Mikrokontroller 2 Sensoren 4.1, 4.2,... 4.6 angeschlossen, die Umgebungsbedingungen des Positionsmesssystems bzw. eines gesamten Servoantriebs messen, z. B. die Temperatur, Erschütterungen, Abtriebslast eines das Positions-messsystem verwendenden Servomotors oder dergleichen.

Der Mikrokontroller 2 kann eine Vielzahl von Zustandsgrößen erfassen und in dem Speicher 3 abspeichern. Die in dem Speicher 3 abgespeicherten Zustandsgrößen können über die nicht dargestellte an sich bekannte Schnittstelle von der nicht dargestellten an sich bekannten elektronischen Steuereinheit abgefragt und ausgelesen werden.

Beispielsweise kann der Mikrokontroller 2 die Betriebsdauer, in welcher das Positionsmesssystem eingeschaltet und in Betrieb ist, in Echtzeit entsprechend der von der Uhr 5 vorgegebenen Realzeit messen und speichern. Weiter kann der Mikrokontroller 2 die Anzahl der Umkehrungen der Bewegungsrichtung der Positionsmesseinrichtung 1 und somit auch eines Servoantriebs zählen und abspeichern. Falls die Positionsmesseinrichtung 1 als rotatorische Messeinrichtung ausgebildet ist, kann der Mikrokontroller 2 die Anzahl der Umdrehungen der Welle der Positionsmesseinrichtung 1 zählen und in dem Speicher 3 abspeichern.

Weiter kann der Mikrokontroller 2 Betriebswerte des Messsystems erfassen, z. B. die Amplitude der Spannung oder des Stromes der Positionssignale der Positionsmesseinrichtung 1, Geschwindigkeits- und/oder Beschleunigungswerte, die durch die Positionsmesseinrichtung 1 erfasst werden usw. Vorzugsweise werden jeweils die Maximalwerte dieser Betriebswerte durch den Mikrokontroller 2 ermittelt und in dem Speicher 3 abgelegt. Diese Maximalwerte können als Maxima während der gesamten Betriebsdauer ermittelt und abgespeichert werden oder es können die Maxima jeweils während vorgegebener und mittels der Uhr 5 gemessener Zeitintervalle bestimmt werden, so dass jeweils die Maxima innerhalb der aufeinanderfolgenden Zeitintervalle in dem Speicher 3 abgelegt werden.

Schließlich können über die Sensoren 4.1 bis 4.6 Informationen über die Umgebungsbedingungen des Positionsmesssystems oder eines mit dem Positionsmesssystem verbundenen Servomotors oder dergleichen erfasst werden und über den Mikrokontroller 2 in dem Speicher 3 abgespeichert werden. Auch hier ist es für die Zwecke der Funktionsüberwachung und Dokumentation zweckmäßig, die Maxima der durch die Sensoren 4.1 bis 4.6 erfassten Messwerte zu ermitteln und diese Maxima in dem Speicher 3 abzuspeichern. Dabei können ebenfalls die Maxima über die gesamte Betriebsdauer des Positionsmesssystems abgespeichert werden oder jeweils die Maxima in vorgegebenen aufeinanderfolgenden Zeitintervallen.

Bei dem erfindungsgemäßen Positionsmesssystem können nicht nur die für das Positionsmesssystem charakteristischen Parameter des sogenannten elektronischen Typenschilds gespeichert und bei Bedarf abgefragt werden. Es können auch während des Betriebs des Positionsmesssystems jeweils aktuelle Zustandsgrößen, die die Funktion des Messsystems bzw. Servoantriebs oder Umgebungsbedingungen betreffen, erfasst und abgespeichert bzw. aufgezeichnet werden. Damit ist es möglich, die Funktion des Positionsmesssystems bzw. Servoantriebs zu überwachen und zu dokumentieren, wodurch die Zuverlässigkeit und Fehlerermittlung verbessert wird. Weiter können Umgebungsbedingungen erfasst und erforderlichenfalls den die Funktion betreffenden Betriebswerten zugeordnet werden. Schließlich können die erfassten und abgespeicherten Zustandsgrößen dazu genutzt werden, die Lebensdauer und Betriebssicherheit des Positionsmesssystems bzw. Servoantriebs zu bestimmen und zu dokumentieren und um gegebenenfalls erforderliche Wartungstermine zu ermitteln und anzuzeigen.

## Patentansprüche

1. Positionsmesssystem mit einer Positionsmesseinrichtung (1), die als lineare oder rotatorische Messeinrichtung ausgebildet ist und eine optisch, kapazitiv, induktiv oder in sonstiger Weise abtastbare Maßverkörperung aufweist, mit einer Schnittstelle zur Übertragung der Positionssignale der Positionsmesseinrichtung (1) zu einer elektronischen Steuereinheit, mit einem Mikrokontroller (2) und mit einem nicht-flüchtigen Speicher (3), in welchem charakteristische Werte des Positionsmesssystems abgespeichert sind und aus welchem diese Werte über die Schnittstelle auslesbar sind, wobei der Mikrokontroller (2) während des Betriebs des Positionsmesssystems Zustandsgrößen dieses Positionsmesssystems und/oder eines das Positionsmesssystem verwendenden Servoantriebs erfasst,
**dadurch gekennzeichnet, dass** dem Mikrokontroller (2) eine die reale Uhrzeit angebende Uhr (5) zugeordnet ist, und dass der Mikrokontroller (2) die jeweils aktuellen Zustandsgrößen in der realen Uhrzeit erfasst und in dem nicht-flüchtigen Speicher (3) abspeichert und fortlaufend aufzeichnet.

2. Positionsmesssystem nach Anspruch 1,
**dadurch gekennzeichnet, dass** die Uhr (5) in das Positionsmesssystem integriert ist.

3. Positionsmesssystem nach Anspruch 1,
**dadurch gekennzeichnet, dass** die Uhr (5) extern in der Steuereinheit integriert ist und im Betrieb dem Positionsmesssystem zugeschaltet wird.

4. Positionsmesssystem nach Anspruch 1,
**dadurch gekennzeichnet, dass** die Zustandsgrößen Betriebswerte des Positionsmesssystems und/oder des Servoantriebs umfassen.

5. Positionsmesssystem nach Anspruch 4,
**dadurch gekennzeichnet, dass** Maxima der Betriebswerte ermittelt und abgespeichert werden.

6. Positionsmesssystem nach Anspruch 5,
**dadurch gekennzeichnet, dass** die Maxima der Betriebswerte in vorgebbaren Zeitintervallen ermittelt und abgespeichert werden.

7. Positionsmesssystem nach einem der Ansprüche 4 bis 6,
**dadurch gekennzeichnet, dass** die Betriebswerte die Spannung und/oder den Strom der Positionssignale und/oder die Geschwindigkeit und/oder die Beschleunigung der Positionsmesseinrichtung (1) umfassen.

8. Positionsmesssystem nach einem der Ansprüche 4 bis 6,
**dadurch gekennzeichnet, dass** die Betriebswerte die Betriebsdauer und/oder die Anzahl der Umkehrungen der Bewegungsrichtung der Positionsmesseinrichtung (1) und/oder bei rotatorischen Positionsmesseinrichtungen (1) die Anzahl der Umdrehungen der Positionsmesseinrichtung (1) umfassen.

9. Positionsmesssystem nach einem der Ansprüche 1 bis 3,
**dadurch gekennzeichnet, dass** das Positionsmesssystem bzw. der Servoantrieb zusätzliche Sensoren (4.1, 4.2 ... 4.6) aufweist und die Zustandsgrößen Messwerte dieser Sensoren sind.

10. Positionsmesssystem nach Anspruch 9,
**dadurch gekennzeichnet, dass** die Maxima der Messwerte der Sensoren (4.1, 4.2 ... 4.6) ermittelt und abgespeichert werden.

11. Positionsmesssystem nach Anspruch 10,
**dadurch gekennzeichnet, dass** die Maxima der Messwerte jeweils innerhalb vorgegebener Zeitintervalle ermittelt und abgespeichert werden.

12. Positionsmesssystem nach einem der Ansprüche 9 bis 11,
**dadurch gekennzeichnet, dass** die Sensoren (4.1, 4.2, ... 4.6) Sensoren für die Temperatur und/oder für Erschütterungen und/oder für die mechanische Belastung der Positionsmesseinrichtung (1) und/oder des Servoantriebs umfassen.

## Claims

1. Position measuring system with a position measuring device (1) designed as a linear or rotatory measuring device and having a material measure that can be scanned optically, capacitively, inductively or in another way, with an interface to transmit the position signals of the position measuring device (1) to an electronic control unit, with a microcontroller (2) or microprocessor and a non-volatile memory (3), in which characteristic values of the position measuring system are stored, and from which these values can be read out via the interface, wherein the microcontroller (2) records state variables of said position measuring system and/or of a servo drive using said position measuring system during the position measuring system's operation,
**characterized in that** a clock (5) is assigned to the microcontroller (2), and that the microcontroller (2) records the actual state variables in the real clock time and stores these variables in the memory (3) continuously.

2. Position measuring system according to claim 1,
**characterized in that** the clock (5) is integrated into the position measuring system.

3. Position measuring system according to claim 1,
**characterized in that** the clock (5) is externally integrated into the control unit, and said clock is connected to the position measuring system during operation.

4. Position measuring system according to claim 1,
**characterized in that** the state variables comprise operating values of the position measuring system and/or the servo drive.

5. Position measuring system according to claim 4,
**characterized in that** maxima of the operating values are determined and stored.

6. Position measuring system according to claim 5,
**characterized in that** the maxima of the operating values are determined and stored in presettable time intervals.

7. Position measuring system according to one of the claims 4 through 6,
**characterized in that** the operating values comprise the voltage and/or the current of the position signals and/or the speed and/or the acceleration of the position measuring device (1).

8. Position measuring system according to one of the claims 4 through 6,
**characterized in that** the operating values comprise the period of operation and/or the number of reversals of the direction of movement of the position measuring device (1), and/or, in the case of rotatory position measuring devices (1), the number of revolutions of such position measuring device (1).

9. Position measuring system according to one of the claims 1 through 3,
**characterized in that** the position measuring system and/or the servo drive features additional sensors (4.1, 4.2 ... 4.6), and that the state variables are measured values of said sensors.

10. Position measuring system according to claim 9,
**characterized in that** the maxima of the measured values of the sensors (4.1, 4.2 ... 4.6) are determined and stored.

11. Position measuring system according to claim 10,
**characterized in that** the maxima of the measured values are determined and stored within preset time intervals, in each case.

12. Position measuring system according to one of the claims 9 through 11,
**characterized in that** the sensors (4.1, 4.2 ... 4.6) comprise sensors for temperature and/or for vibrations and /or for the mechanical demands of the position measuring device (2) and/or of the servo drive.

## Revendications

1. Système de mesure de position comportant un dispositif de mesure de position (1) qui est réalisé sous la forme d'un dispositif de mesure linéaire ou rotatif et comporte une échelle de mesure pouvant être détectée par des moyens optiques, capacitifs, inductifs, ou d'une autre manière, comportant une interface pour permettre de transmettre les signaux de positions du dispositif de mesure de position (1) à une unité de commande électronique, un micro contrôleur (2) et une mémoire non volatile (3) dans laquelle sont enregistrées des valeurs caractéristiques du système de positionnement et de laquelle ces valeurs peuvent être extraites par l'intermédiaire de l'interface, ce micro contrôleur (2) détectant pendant le fonctionnement du système de mesure de position des grandeurs d'état de ce système de mesure de position et/ou une commande assistée utilisant le système de mesure de position,
**caractérisé en ce qu'**
au micro contrôleur (2) est associée une horloge (5) indiquant l'heure réelle et le micro contrôleur (2) détecte les grandeurs d'état actuelles respectives en temps réel et les conserve dans la mémoire non volatile (3) et les enregistre en continu.

2. Système de mesure de position conforme à la revendication 1,
**caractérisé en ce que**
l'horloge (5) est intégrée dans le système de mesure de position.

3. Système de mesure de position conforme à la revendication 1,
**caractérisé en ce que**
l'horloge (5) est intégrée à l'extérieur de l'unité de commande et est branchée sur le système de mesure de position en fonctionnement.

4. Système de mesure de position conforme à la revendication 1,
**caractérisé en ce que**
les grandeurs d'état renferment des valeurs de fonctionnement du système de mesure de position et/ou de la commande assistée.

5. Système de mesure de position conforme à la revendication 4,
**caractérisé en ce que**
les maxima des valeurs de fonctionnement sont déterminés et conservés en mémoire.

6. Système de mesure de position conforme à la revendication 5,
**caractérisé en ce que**
les maxima des valeurs de fonctionnement sont déterminés et conservés en mémoire dans des intervalles de temps prédéfinis.

7. Système de mesure de position conforme à l'une des revendications 4 à 6,
**caractérisé en ce que**
les valeurs de fonctionnement renferment la tension et/ou le courant des signaux de position et/ou la vitesse et/ou l'accélération du dispositif de mesure de position (1).

8. Système de mesure de position conforme à l'une des revendications 4 à 6,
**caractérisé en ce que**
les valeurs de fonctionnement renferment la durée de fonctionnement et/ou le nombre d'inversions du sens de déplacement du dispositif de mesure de position (1) et/ou dans le cas de dispositifs de mesure de position (1) rotatifs le nombre de tours du dispositif de mesure de position (1).

9. Système de mesure de position conforme à l'une des revendications 1 à 3,
**caractérisé en ce que**
le système de mesure de position ou la commande assistée comporte des capteurs supplémentaires (4.1, 4.2... 4.6) et les grandeurs de fonctionnement sont des valeurs de mesure de ces capteurs.

10. Système de mesure de position conforme à la revendication 9,
**caractérisé en ce que**
les maxima des valeurs de mesure des capteurs (4.1, 4.2... 4.6) sont déterminés et conservés en mémoire.

11. Système de mesure de position conforme à la revendication 10,
**caractérisé en ce que**
les maxima des valeurs de mesure sont respectivement déterminés et conservés en mémoire dans des intervalles de temps prédéfinis.

12. Système de mesure de position conforme à l'une des revendications 9 à 11,
**caractérisé en ce que**
les capteurs (4.1, 4.2... 4.6) sont des capteurs de température et/ou de vibration et/ou de charge mécanique du dispositif de mesure de position (1) et/ou de la commande assistée.
